# EUROPÄISCHE PATENTSCHRIFT

(11) **EP 3 874 721 B1**
(45) Veröffentlichungstag und Bekanntmachung des Hinweises auf die Patenterteilung: **22.02.2023**
(21) Anmeldenummer: 19798236.6
(22) Anmeldetag: 31.10.2019
(51) Int. Cl.: H04L 67/12, H04L 67/00, H04L 9/32, H04L 12/40, H04W 4/48, H04W 12/106

(54) **VORRICHTUNG ZUM KONFIGURIEREN UND ZUM VALIDIEREN EINES EINGRIFFS IN EIN ECHTZEIT-ETHERNET-DATENNETZWERK**
APPARATUS FOR CONFIGURING AND VALIDATING AN INTERVENTION IN A REAL-TIME ETHERNET DATA NETWORK
DISPOSITIF POUR LA CONFIGURATION ET LA VALIDATION D'UNE INTERVENTION DANS UN RÉSEAU DE DONNÉES ETHERNET EN TEMPS RÉEL

(30) Priorität: 01.11.2018 DE 102018218736
(43) Veröffentlichungstag der Anmeldung: 08.09.2021
(73) Patentinhaber: Continental Automotive Technologies GmbH, 30165 Hannover (DE)
(72) Erfinder: ZINNER, Helge, 60488 Frankfurt am Main (DE); HOPF, Daniel, 60488 Frankfurt am Main (DE)
(74) Vertreter: Continental Corporation
(86) Internationale Anmeldenummer: PCT/EP2019/079862
(87) Internationale Veröffentlichungsnummer: WO 2020/089409

(56) Entgegenhaltungen:
- EP-A1- 3 382 976
- DE-A1- 10 037 397
- DE-A1-102007 040 094
- DE-A1-102014 219 322
- US-A1- 2008 216 067
- US-A1- 2017 192 770
- US-A1- 2017 212 746
- US-A1- 2019 146 775

## Beschreibung

Die vorliegende Erfindung betrifft Systeme für Echtzeit-Ethernet-Datennetzwerke.

Insbesondere betrifft die vorliegende Erfindung eine Vorrichtung zum Konfigurieren und zum Validieren eines Eingriffs in ein Echtzeit-Ethernet-Datennetzwerk für ein Kraftfahrzeug.

Mit zunehmendem Interesse bekommt der neue Standard Ethernet-TSN (Time Sensitive Networking) das Anwendungsfeld des automatisierten Fahrens zugewiesen. Im Gegensatz zu Standard-Ethernet und Ethernet-AVB kann Ethernet-TSN Paket-Übertragungsgarantien (für eine maximale Übertragungszeit) im Bereich von wenigen Mikrosekunden garantieren.

Weiterhin bietet der Standard viel Unterstützung im Bereich Safety und Security wie beispielsweise durch die Erkennung und Eliminierung von fehlerhaften Datenströmen.

Auch sogenannte "Babbling Idiots" können erkannt und eliminiert werden. Dadurch kann eine Fail-Safe-Funktionsweise für den Rest des Fahrzeugnetzwerkes angeboten werden.

TSN-Ethernet als neue Vernetzungstechnologie findet zunehmend Verwendung im Automobil. Damit das automatisierte Fahren mit schnellen Bussystemen (wie Ethernet) unterstützt werden kann müssen Lösungen angeboten werden, die auch langfristig unter Benutzung eines Backends kongruiert werden können. Sei es auch Anfangs nur im Fehlerfall, um einen solchen nachträglich zu eliminieren.

Im Hinblick auf zukünftig Assistenzfunktionen, welche teilweise die Steuerung des Kraftfahrzeuges komplett übernehmen sollen (vielleicht auch aus dem Backend), werden zunehmend Mechanismen notwendig sein, welche eine Rekonfiguration des Bordnetzes (und Anpassung an neue Fahrfunktionen) erlauben.

Im Hinblick auf die Umgebungserkennung lasst sich die Fülle der unterschiedlichen Fahrsituationen heute gar nicht vollständig bemessen. Neben den statischen Verkehrsregeln stehen weit komplexere Situationen mit Fußgängern, Gegenständen, Tieren und anderen Fahrzeugen im Verkehr bevor.

Software-Updates sind zwar heute schon möglich, jedoch muss hierfür der notwendige Speicher (z. B. Ressourcen im Ethernet-Switch) für Funktionen, welche eigentlich noch unbekannt sind, vorgehalten werden.

Dies ist mit Blick auf die Kosten im Auto nur schwer realisierbar.

Zudem begrenzen die (statische) Bordnetzarchitektur und die Performance der Steuergeräte die Funktionsvielfalt neuer Möglichkeiten. Das Bordnetz und die Steuergeräte sind heute genau auf Funktionen ausgelegt, die dem Fahrzeug mit Verlassen der Produktionsfabrik zugewiesen werden und keine die später hinzukommen. Beispielsweise kann ein Auto auch heute bei Auslieferung bereits fest eingeplante Applikationen für die Speicher vorgehalten wird haben, welche erst nachträglich geladen werden.

Bevor ein Ethernet-TSN-Netzwerk (Einsatz im Bereich des automatisierten Fahrens sichtbar) genutzt werden kann muss bspw. mittels Reservierungsanfragen von Sendern zu etwaigen Empfängern eine gewisse Dienstgüte (Latenz und Bandbreite) reserviert werden. Dazu ist es jedoch notwendig eine Vielzahl von Parameter im Gesamtnetzwerk zu konfigurieren.

Ethernet-TSN umfasst alleine mehr als zehn einzelne Substandards, welche eine Vielzahl von Zustandsmaschinen und Parametern definieren.

Beispielsweise umfasst alleine der Standard der Zeitsynchronisation IEEE802.1AS-Rev folgende Parameter:
- Auswahl der besten Uhr
- Frequenz der Leitungsverzögerungsmessung
- Obergrenze der Leitungsverzögerungen in Nanosekunden
- Frequenz des Austausches von Zeitinformation
- Frequenz des Austausches von Announce-Informationen
- Uhren-Qualität I
- Uhren-Qualität 2
- Uhrentyp
und viele weitere.

Das Dokument DE 100 37 397 A1 offenbart ein Verfahren zum Laden von Software in ein Zielgerät eines Fahrzeugsteuerungssystems mit mehreren Geräten, sowie ein Fahrzeugsteuerungssystem zur Durchführung des Verfahrens.

Das Dokument US 2008/216067 A1 offenbart betrifft die Installation von Software in einer ECU.

Das Dokument DE 10 2007 040094 A1 offenbart ein Verfahren und ein System zur reversiblen Durchführung einer Konfigurationsänderung bei einem Steuergerät, insbesondere bei einem Steuergerät eines Fahrzeuges.

Es ist eine Aufgabe der vorliegenden Erfindung, eine verbesserte Vorrichtung zum Konfigurieren und zum Validieren eines Eingriffs in ein Echtzeit-Ethernet-Datennetzwerk für ein Kraftfahrzeug breitzustellen.

Diese Aufgabe wird durch die Gegenstände der unabhängigen Patentansprüche gelöst. Weiterbildungen und Ausführungsformen sind den abhängigen

Patentansprüchen, der Beschreibung und den Figuren der Zeichnungen zu entnehmen.

Ein erster Aspekt der vorliegenden Erfindung betrifft eine Vorrichtung zum Konfigurieren und zum Validieren eines Eingriffs in ein

Echtzeit-Ethernet-Datennetzwerk für ein Kraftfahrzeug.

Die Vorrichtung zum Konfigurieren und zum Validieren eines Eingriffs in ein Echtzeit-Ethernet-Datennetzwerk umfasst eine Fahrzeugdiagnoseeinrichtung, eine erste Datenspeichereinrichtung, eine erste Datenprüfungseinrichtung, eine zweite Datenspeichereinrichtung, und eine zweite Datenprüfungseinrichtung.

Die Fahrzeugdiagnoseeinrichtung ist dazu ausgebildet,

Konfigurationsänderungsdaten zu empfangen und an eine erste Datenspeichereinrichtung zu übertragen.

Die erste Datenspeichereinrichtung ist dazu ausgebildet, die Konfigurationsänderungsdaten von der Fahrzeugdiagnoseeinrichtung zu empfangen und abzuspeichern.

Die erste Datenprüfungseinrichtung ist dazu ausgebildet, die in der ersten Datenspeichereinrichtung abgespeicherten Konfigurationsänderungsdaten mit einer ersten Integritätsprüfung zu prüfen und im Falle einer positiven ersten Integritätsprüfung an die zweite Datenspeichereinrichtung zu übertragen.

Die zweite Datenspeichereinrichtung ist dazu ausgebildet, die Konfigurationsänderungsdaten von der ersten Datenprüfungseinrichtung zu empfangen und abzuspeichern.

Die zweite Datenprüfungseinrichtung ist dazu ausgebildet, die in der zweiten Datenspeichereinrichtung abgespeicherten Konfigurationsänderungsdaten mit einer zweiten Integritätsprüfung zu prüfen und im Falle einer positiven zweiten Integritätsprüfung für das Echtzeit-Ethernet-Datennetzwerk freizugeben. Die Integritätsprüfung kann dabei auch eine Prüfung der Realisierbarkeit oder der Umsetzung umfassen bzw. eine Ermittlung der Auswirkungen auf andere Steuergeräte oder ECUs.

Mit anderen Worten ausgedrückt, die Integritätsprüfung umfasst eine Prüfung auf Tauglichkeit und/oder Realisierbarkeit der Konfiguration, dabei werden auch die Querabhängigkeiten abgewägt.

Die zweite Datenprüfungseinrichtung verfügt beispielsweise über die Tabellen, in denen hinterlegt ist, welche Datenströme mit welchen Parametern im Netzwerk vorhanden sind, welche rekonfiguriert werden sollen, welche entfernt werden sollen und welche neu hinzukommen.

Die zweite Datenprüfungseinrichtung bzw. das E/E-Architekturmodul kann dabei prüfen ob, es durch die Neu-Konfiguration im Netzwerk zu nicht realisierbaren Konflikten kommt und in solch einem Fall eine Rekonfiguration unterbinden.

Die vorliegende Erfindung ermöglicht, ein technisches System in einem Fahrzeug, welches es erlaubt, eine Ethernet-TSN-Konfiguration in den Steuergeräten und Switchen teilweise oder komplett zu erneuern. Dabei bietet die vorliegende Erfindung eine Möglichkeit die ECUs - Electronic Control Unit bezeichnet Steuergeräte oder Mikrocontroller - auch aus der Cloud zu rekonfigurieren.

Die vorliegende Erfindung umfasst ein Systemdesign und mehrere Vorgänge, um zudem ein zeitgesteuertes Update der Ethernet Switches - auch als Multiport-Bridge oder "Netzwerkweiche" bezeichnet - zu ermöglichen. Dabei werden zur Kommunikation verschiedene Service-orientierte-Varianten benutzt.

Die vorliegende Erfindung ermöglicht vorteilhafterweise den Einsatz im Bereich des automatisierten Fahrens, da hier eine Vielzahl von Steuergeräten interagieren und eine Konfigurationsänderung im laufenden Betrieb vorgenommen werden kann. Beispielsweise durch Update von Sensoren, beispielsweise durch neue Verkehrsregeln, beispielsweise durch Al Algorithmen und Schwarmintelligenz.

Da ein Systemhersteller meist nur einzelne Steuergeräte herstellt, muss er sein Steuergerät auch so absichern, dass eventuelle Fehlfunktionen von anderen Steuergeräten kompensiert werden können.

Die vorgeschlagene Lösung ermöglicht es, Ethernet auch in Fahrzeugsystemen einzusetzen, in denen hohe Anforderungen an funktionaler Sicherheit gegeben sind. Zudem bietet die vorliegende Erfindung die Möglichkeit Softwareupdates für neue Fahrfunktionen anzubieten und diesen Funktionen auch eine definierte Dienstgüte im Fahrzeugkommunikationsnetz zuzuweisen.

Die Zuverlässigkeit des Fahrzeugnetzwerkes kann hiermit erhöht werden. Steuergeräte als auch die darin wirkenden Mikrocontroller können im Fehlerfall von der Kommunikation getrennt werden, um den Schaden oder eine nachteilige Auswirkung auf andere Steuergeräte und andere Kommunikationsdaten gering zu halten. Durch die vorliegende Erfindung kann die Ausfallwahrscheinlichkeit von Netzwerken als auch ein etwaiger Schaden minimiert werden.

Dies bietet eine zusätzliche und während des Betriebes hilfreiche Überwachungsfunktion, die gerade im Bereich des automatisierten Fahrens für die funktionale Sicherheit dienlich sein könnte.

In den aktuellen IEEE Ethernet Standards gibt es kein Verfahren welches das oben beschriebene Problem adressiert oder gar löst.

Es gibt kein Verfahren das gewährleisten kann, dass eine Ethernet-TSN-Konfiguration im Kraftfahrzeug korrekt konfiguriert wird als auch störungsfrei erneuert werden kann.

Mit anderen Worten ausgedrückt, der Grundgedanke ist hier nicht nur das flashen und konfigurieren, sondern das E/E Architekturmodul - welches die Konfiguration auch im Hinblick auf andere ECUs bzw. Datenströme prüft.

Die vorliegende Erfindung ermöglicht es, Netzwerkressourcen vom Backend aus zu konfigurieren oder zuzuweisen oder die Verteilung davon zu planen, Systemfehler zu beseitigen, neue Algorithmen/Funktionen zum automatisierten Fahren aufzuspielen und/oder zu aktualisieren (Update), eine Validierung der zugesicherten Ressourcen zu erreichen und Ethernet-Switches mit TSN zu konfigurieren.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass die Vorrichtung ferner eine Konfigurationsmastereinrichtung aufweist, welche dazu ausgebildet ist, die Konfigurationsänderungsdaten von der zweiten Datenspeichereinrichtung zu empfangen und an einen Switch und/oder eine Komponente des Echtzeit-Ethernet-Datennetzwerkes zu senden.

In einer vorteilhaften Ausführungsform der vorliegenden Erfindung ist vorgesehen, dass die erste Datenprüfungseinrichtung dazu ausgebildet ist, die in der ersten Datenspeichereinrichtung abgespeicherten Konfigurationsänderungsdaten mit der ersten Integritätsprüfung auf einen Kommunikationsparameter hin zu prüfen, etwa in der Form einer maximalen Paketgröße und/oder einer Übertragungsfrequenz und/oder einer Übertragungsrate und/oder einer Absenderadresse, und/oder einer Empfangsadresse, und/oder eines Protokolls.

In einer vorteilhaften Ausführungsform der vorliegenden Erfindung ist vorgesehen, dass die zweite Datenprüfungseinrichtung dazu ausgebildet ist, die in der zweiten Datenspeichereinrichtung abgespeicherten Konfigurationsänderungsdaten mit der zweiten Integritätsprüfung in der Form einer Hashfunktion-Prüfung und/oder einer zyklischen Redundanzprüfung und/oder einer Tauglichkeitsprüfung und/oder einer Realisierbarkeitsprüfung der Konfiguration zu prüfen.

Bei der zweiten Integritätsprüfung kann beispielsweise ferner geprüft werden, ob und welche Auswirkungen die Konfiguration auf das Bordnetz hat. Dies umfasst eine Prüfung der ECUs auf die geflashte und/oder konfigurierte Konfiguration, und eine Prüfung der damit verbundenen Kommunikationsbeziehung und evtl. Querverbindungen. Wenn beispielsweise ein neuer Datenstrom konfiguriert wird und dieser mehr Datenrate benötigt, dann prüft dieses Modul, ob genügenden Datenrate noch zur Verfügung steht.

Weiterhin kann beispielsweise bei einer Neukonfiguration die Priorität von Datenströmen verändert werden - das Modul prüft, ob die Dienstgüteanforderungen der anderen Datenströme dadurch immer noch eingehalten werden.

In einer vorteilhaften Ausführungsform der vorliegenden Erfindung ist vorgesehen, dass die Vorrichtung ferner eine ARQ/TCP-Einrichtung aufweist, welche dazu ausgebildet ist, die Übertragung der Konfigurationsänderungsdaten an den Switch und/oder die Komponente des Echtzeit-Ethernet-Datennetzwerkes und den darauf basierten Konfigurationsvorgang zu überwachen, sowie den Erfolg der Konfiguration zurückzumelden.

In einer vorteilhaften Ausführungsform der vorliegenden Erfindung ist vorgesehen, dass die Vorrichtung dazu ausgebildet ist, einen einzelnen Konfigurationsvorgang für einen Switch und/oder eine Komponente des Echtzeit Ethernet-Datennetzwerkes zu überwachen.

In einer vorteilhaften Ausführungsform der vorliegenden Erfindung ist vorgesehen, dass die Vorrichtung dazu ausgebildet ist, eine Vielzahl von Konfigurationsvorgängen für eine Vielzahl von Netzwerkweichen und/oder für eine Vielzahl von Komponenten des Echtzeit-Ethernet-Datennetzwerkes zu überwachen.

In einer vorteilhaften Ausführungsform der vorliegenden Erfindung ist vorgesehen, dass die Vorrichtung dazu ausgebildet ist, die Vielzahl der Konfigurationsvorgänge für die Vielzahl der Netzwerkweichen und/oder für die Vielzahl der Komponenten des Echtzeit-Ethernet-Datennetzwerkes zeitlich zu priorisieren und/oder zumindest teilweise simultan auszuführen oder beispielsweise nach erfolgreicher Konfiguration simultan zu aktivieren.

In einer vorteilhaften Ausführungsform der vorliegenden Erfindung ist vorgesehen, dass die Vorrichtung dazu ausgebildet ist, die Vielzahl der Konfigurationsvorgänge für die Vielzahl der Netzwerkweichen und/oder für die Vielzahl der Komponenten des Echtzeit-Ethernet-Datennetzwerkes zeitlich zumindest teilweise simultan auf den Netzwerkweichen und/oder den Komponenten zu aktivieren.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

Es zeigen:
Fig. 1:eine schematische Darstellung einer Vorrichtung gemäß einem Ausführungsbeispiel der vorliegenden Erfindung;
Fig. 2: eine schematische Darstellung einer Vorrichtung gemäß einem Ausführungsbeispiel der vorliegenden Erfindung;
Fig. 3: eine schematische Darstellung eines Architektur Moduls einer Vorrichtung gemäß einem Ausführungsbeispiel der vorliegenden Erfindung; und
Fig. 4: eine schematische Darstellung eines Verfahrens gemäß einem Ausführungsbeispiel der vorliegenden Erfindung.

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

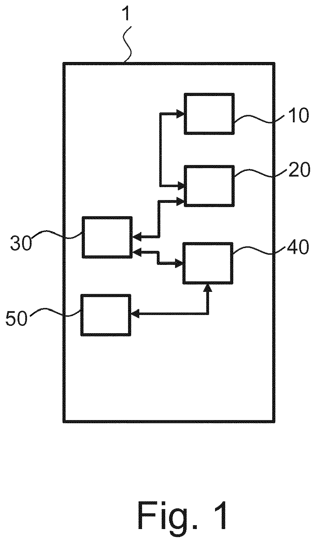

Die Fig. 1 zeigt eine schematische Darstellung einer Vorrichtung gemäß einem Ausführungsbeispiel der vorliegenden Erfindung.

Die Vorrichtung 1 zum Konfigurieren und zum Validieren eines Eingriffs in ein Echtzeit-Ethernet-Datennetzwerk für ein Kraftfahrzeug umfasst eine Fahrzeugdiagnoseeinrichtung 10, eine erste Datenspeichereinrichtung 20 eine erste Datenprüfungseinrichtung 30, eine zweite Datenspeichereinrichtung 40, und eine zweite Datenprüfungseinrichtung 50.

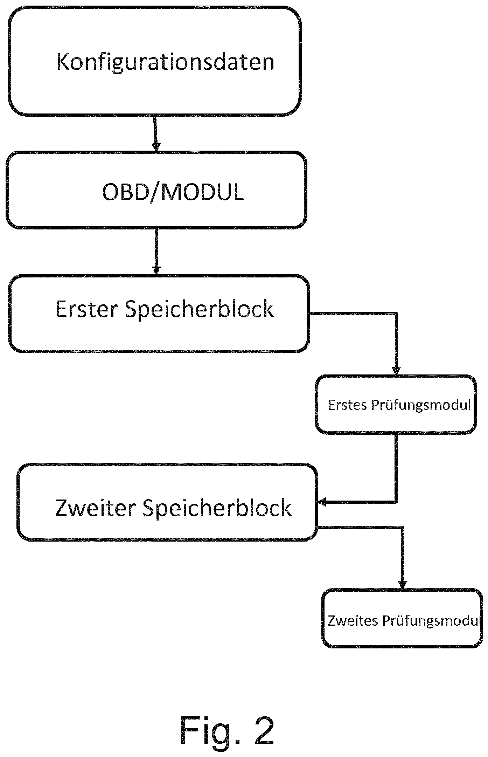

Die Fig. 2 zeigt eine schematische Darstellung einer Vorrichtung gemäß einem Ausführungsbeispiel der vorliegenden Erfindung.

Die Fig. 2 stellt die durch die vorliegende Erfindung vorgeschlagene Systemarchitektur zur Konfiguration und Überwachung eines TSN-Netzwerkes oder eines Echtzeit-Ethernet-Netzwerkes oder eines Ethernet-Netzwerkes dar.

Die vorliegende Erfindung ermöglicht, dass beim Einspielen einer neuen Konfiguration (z. B. einstellen von max. Bandbreite und Paketgröße für einen Switch, Veränderung von Dienstgüteparametern, Konfigurationen eines neunen VLAN, Veränderung der Datenstromempfänger, Veränderung der Datenstromfrequenz, Aktivierung von Security-Protokollen) nicht das eigentliche Flashen dadurch behindert bzw. blockiert wird, weil dadurch Filter noch während des Vorgangs gesetzt werden.

Die Konfiguration wird beispielsweise durch eine OBD-Schnittstelle oder durch eine Funkschnittstelle in das Gateway übermittelt. Dabei wird zuallererst die Kommunikation, unabhängig vom Inhalt, in Echtzeit geprüft.

Die erste Datenüberprüfungseinrichtung in Form eines Security-Moduls prüft beispielsweise die maximale Paketgröße als auch die Frequenz der Kommunikationspakete.

Sollte sich hierbei kein Fehler zeigen so werden die Daten in einem ersten Speicherblock abgespeichert. Hierbei handelt sich es noch um unsichere Daten, weshalb dies in einem physikalisch separaten Speicherblock vorgenommen werden kann.

Dadurch soll hier vermieden werden, dass bei fehlerhaften oder bösartigen Daten auf den sicheren Speicherblock zugegriffen wird.

Ferner kann vorgesehen sein, eine sogenannte "Deep Packet Inspection" auf den heruntergeladenen Inhalt durchzuführen. Deep Packet Inspection (DPI; auch complete packet inspection oder Information eXtraction, IX) steht für ein Verfahren in der Netzwerktechnik, Datenpakete zu überwachen und zu filtern. Dabei werden gleichzeitig der Datenteil und der Headerteil des Datenpaketes auf bestimmte Merkmale wie Protokollverletzungen, Computerviren, Spam und weitere unerwünschte Inhalte untersucht.

Neben Prüfung von Hash-Code oder CRC usw. soll hierdurch auch der Inhalt nach etwaiger Schadsoftware untersucht werden.

Bei erfolgreicher Prüfung (der vorhandenen Regeln) wird der Inhalt in den sicheren Speicherblock übertragen. Hier befindet sich die Konfigurationsdatenänderung in der Demilitarisierten Zone des Kraftfahrzeugs.

Die abgespeicherte Konfiguration, welche auf das Netzwerk angewendet werden soll, wird in einem speziellen Modul auf dessen Gültigkeit und Machbarkeit geprüft.

Die zweite Datenüberprüfungseinrichtung in Form eines E/E-Architektur-Moduls prüft beispielsweise, ob die heruntergeladene Konfiguration bei Ausführung im Netzwerk überhaupt sicher ausführbar ist und nicht etwa Schaden verursacht bzw. ob bestehende Kommunikationsverbindungen gestört werden.

Die zweite Datenüberprüfungseinrichtung prüft u.a. wie viele Funktionen vom Softwareupdate betroffen sind, also wie viele ECUs/Switches und welche Kommunikationsbeziehungen.

Beispielsweise werden hier die Adressen, der Speicherbedarf, die Kommunikationsbeziehungen und die Bordnetzlast geprüft. Beispielsweise könnte eine gemäß den heruntergeladenen Konfigurationsdaten durchzuführende Neukonfiguration das gesamte Netzwerk zum Erliegen bringen, wenn beispielsweise Kommunikationsports deaktiviert werden.

Dies wird durch die Prüfung durch das E/E-Modul ausgeschlossen. Weiterhin setzt dieses Modul in den entsprechenden Switchen/ECUS die notwendigen Filtereinstellungen damit der Verkehr überhaupt erst passieren kann.

Weiterhin schlägt die vorliegende Erfindung ein Konfigurations-Master-Modul vor, welches Zugriff auf den abgesicherten Speicher hat.

Dieses lädt die geprüften Konfigurationsdaten und sendet die Daten an einen angeschlossenen Switch oder ECU in Abhängigkeit des Zustands des Kraftfahrzeuges.

Dabei kann es vorkommen, dass bspw. ein Update im laufenden Betrieb geflashed werden kann als auch dass ein Update erst durchgeführt werden kann, wenn das Fahrzeug - zumindest das Fahrzeugdatennetzwerk - außer Betrieb ist. Zusätzlich dazu überwacht das ARQ/TCP-Modul den Konfigurationsvorgang und überwacht die Zustandsmaschinen über das erfolgreiche Laden der Konfiguration.

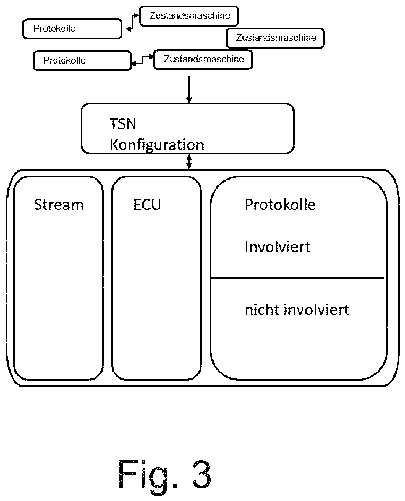

Die Fig. 3 zeigt eine schematische Darstellung einer Vorrichtung gemäß einem Ausführungsbeispiel der vorliegenden Erfindung.

Die Fig. 3 zeigt das unter Fig. 2 gezeigte Architektur-Model im Detail. Dieses Modul hat die Aufgabe das TSN-Netzwerk und die Vielzahl von darin übermittelten Datenströmen zu überwachen.

Im speziellen implementiert das Software-Modul bzw. Architektur-Model neuartige Verfahren, um die Parameter und Zustandsmaschinen der TSN-Protokolle zu überwachen.

Beispielsweise bestimmt das Modul, welches die beste Uhr im System aufweist und/oder damit verbunden ist, stets deren Nachrichtenrate.

Mit Kenntnis über alle Datenströme kann das Modul das Netzwerk und dessen deterministisches Verhalten in Bezug auf neue Fahrfunktionen umzukonfigurieren.

Mit der Information über die Ressourcenverteilung kann das Modul eine Möglichkeit bieten neue bzw. vorher nicht eingeplante Datenströme in ein bestehendes Netzwerk zu integrieren ohne die Beeinträchtigung von bestehenden Datenströmen.

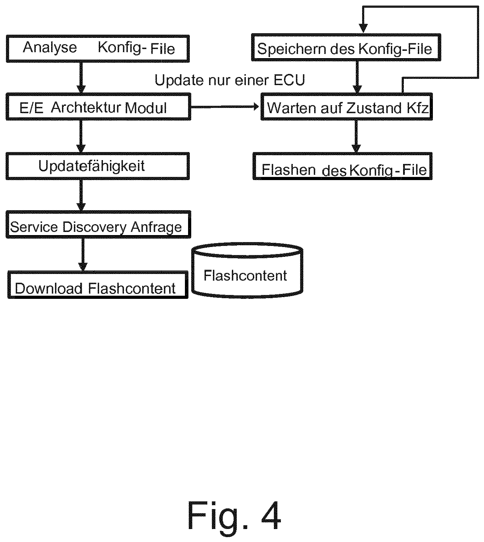

Die Fig. 4 zeigt eine schematische Darstellung eines Verfahrens gemäß einem weiteren Ausführungsbeispiel der vorliegenden Erfindung.

Die Fig. 4 zeigt ein Verfahren zum Ermitteln der Flash-Clients für die Ethernet-relevanten Steuergeräte im Fahrzeug.

Je nach Konfiguration kann zwischen dem Update von einzelnen Steuergeräten/Funktionen und Updates für mehrere zusammenhängende Steuergeräte/Netzwerke/Funktionen unterscheiden werden und dementsprechend kann der Flashvorgang auch darauf auslegt werden. Das Flashen selbst ist nicht das Problem, sondern das nachgelagerte Aktivieren der (neuen) Funktion und damit ein evtl. verändertes Kommunikationsverhalten.

Der Flash-Vorgang kann technologisch bedingt nicht echt simultan durchgeführt werden. Die neuen und/oder geänderten Konfigurationen können prinzipiell beliebig nacheinander im Netzwerk an die Steuergeräte/Switches verteilt werden, die Aktivierung, das heißt das eigentlich verwende oder scharf schalten der neuen Konfiguration muss aber auf allen Teilnehmern zum selben Zeitpunkt erfolgen, damit die geänderten/neuen Kommunikationsströme nicht irgendwo zwischendurch zumindest teilweise auf alte Regelwerke treffen und dann beispielsweise unterbrochen werden.

Für dieses simultane Aktivieren der neuen Konfiguration ist es beispielsweise nötig sicherzustellen, dass alle betroffenen Steuergeräte/Switches eine synchronisierte Zeitbasis besitzen, damit auf jedem Steuergerät auch tatsächlich den selben Zeitpunkt darstellt.

Soll beispielsweise das Netzwerkverhalten grundlegend geändert werden, so ist es wichtig das beispielsweise die geänderten Konfigurationen im gleichen Moment aktiviert werden, da sonst das Netzwerk neuere, zeitlich versetzte Vorgänge blockiert.

Dabei können die zuständigen Flash-Clients der jeweiligen Switche ermittelt werden. Darüber hinaus wird geprüft, ob eine fahrzeugweite Zeitsynchronisation vorliegt.

Diese können entweder direkt bzw. lokal an die Switches über angebunden sein oder sich auch remote im Netzwerk befinden und über das Netzwerk den Switch flashen.

Gemäß einem Ausführungsbeispiel der vorliegenden Erfindung kann dann ein Updatevorgang, der die Konfigurationsdateien mit einem Zeitstempel (Ausführungszeitpunkt) versieht und diese an den Flash-Client mit der Zieladresse, mitteilt ausgeführt werden bzw. vorab verteilt und erst zum angegebenen Zeitpunkt zeitgleich auf den zu aktualisierenden ECUs/Switches ausführt.

Dadurch kann ein synchronisierter Updatevorgang in dem verteilten Netzwerk und Computersystem des Fahrzeuges erreicht werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Die kabellose Übertragung bzw. der kabellose Empfang der Aktualisierungsdaten erfolgt per Bluetooth, WLAN (z. B. WLAN 802.11a/b/g/n oder WLAN 802.11p), ZigBee oder WiMax oder aber auch zellulärer Funksysteme wie GPRS, UMTS oder LTE. Es ist auch die Verwendung anderer Übertragungsprotokolle möglich. Die genannten Protokolle bieten den Vorteil der bereits erfolgten Standardisierung.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

## Patentansprüche

1. Vorrichtung zum Konfigurieren und zum Validieren eines Eingriffs in ein Echtzeit-Ethernet-Datennetzwerk mit ECUs in einem Kraftfahrzeug, die Vorrichtung (1) umfassend:
- eine Fahrzeugdiagnoseeinrichtung (10), welche dazu ausgebildet ist, Konfigurationsänderungsdaten zu empfangen und an eine erste Datenspeichereinrichtung (20) zu übertragen;
- die erste Datenspeichereinrichtung (20), welche dazu ausgebildet ist, die Konfigurationsänderungsdaten von der Fahrzeugdiagnoseeinrichtung (10) zu empfangen und abzuspeichern;
- eine erste Datenprüfungseinrichtung (30), welche dazu ausgebildet ist, die in der ersten Datenspeichereinrichtung (20) abgespeicherten Konfigurationsänderungsdaten mit einer ersten Integritätsprüfung zu prüfen und im Falle einer positiven ersten Integritätsprüfung an eine zweite Datenspeichereinrichtung (40) zu übertragen;
- die zweite Datenspeichereinrichtung (40), welche dazu ausgebildet ist, die Konfigurationsänderungsdaten von der ersten Datenprüfungseinrichtung (30) zu empfangen und abzuspeichern;
- eine zweite Datenprüfungseinrichtung (50), welche dazu ausgebildet ist, die in der zweiten Datenspeichereinrichtung (40) abgespeicherten Konfigurationsänderungsdaten mit einer zweiten Integritätsprüfung zu prüfen und im Falle einer positiven zweiten Integritätsprüfung unter Beachtung des gesamten betroffenen Netzwerkzustands für das Echtzeit-Ethernet-Datennetzwerk freizugeben,
wobei bei der zweiten Integritätsprüfung geprüft wird, ob und welche Auswirkungen die Konfiguration auf das Netzwerk, wobei dies eine Prüfung der ECUs auf die konfigurierte Konfiguration und eine Prüfung der damit verbundenen Kommunikationsbeziehung umfasst,
- eine Konfigurationsmastereinrichtung, welche dazu ausgebildet ist, die freigegeben Konfigurationsänderungsdaten von der zweiten Datenspeichereinrichtung (40) zu empfangen und an einen Switch und/oder eine Komponente des Echtzeit Ethernet-Datennetzwerkes zu senden um eine Ethernet-TSN-Konfiguration in den ECUs und Switchen zumindest teilweise zu erneuern.

2. Vorrichtung nach Patentanspruch 1, wobei die erste Datenprüfungseinrichtung (30) dazu ausgebildet ist, die in der ersten Datenspeichereinrichtung (20) abzuspeichernden Konfigurationsänderungsdaten beim Empfang mit der ersten Integritätsprüfung auf einen Kommunikationsparameter hin zu prüfen, etwa in der Form einer maximalen Paketgröße und/oder einer Übertragungsfrequenz und/oder einer Übertragungsrate und/oder einer Absenderadresse, und/oder einer Empfangsadresse, und/oder eines Protokolls.

3. Vorrichtung nach einem der vorhergehenden Patentansprüche,
wobei die Vorrichtung ferner eine ARQ/TCP-Einrichtung aufweist, welche dazu ausgebildet ist, die Übertragung der Konfigurationsänderungsdaten an den Switch und/oder die Komponente des Echtzeit Ethernet-Datennetzwerkes und den darauf basierten Konfigurationsvorgang zu überwachen.

4. Vorrichtung nach einem der vorhergehenden Patentansprüche,
wobei die Vorrichtung dazu ausgebildet ist, einen einzelnen Konfigurationsvorgang für einen Switch und/oder eine Komponente des Echtzeit Ethernet-Datennetzwerkes zu überwachen.

5. Vorrichtung nach einem der vorhergehenden Patentansprüche,
wobei die Vorrichtung dazu ausgebildet ist, eine Vielzahl von Konfigurationsvorgängen für eine Vielzahl von Netzwerkweichen und/oder für eine Vielzahl von Komponenten des Echtzeit-Ethernet-Datennetzwerkes zu überwachen.

6. Vorrichtung nach Patentanspruch 5,
wobei die Vorrichtung dazu ausgebildet ist, die Vielzahl der Konfigurationsvorgänge für die Vielzahl der Netzwerkweichen und/oder für die Vielzahl der Komponenten des Echtzeit-Ethernet-Datennetzwerkes zeitlich zu priorisieren und/oder zumindest teilweise simultan auszuführen.

7. Vorrichtung nach Patentanspruch 5,
wobei die Vorrichtung dazu ausgebildet ist, die Vielzahl der Konfigurationsvorgänge für die Vielzahl der Netzwerkweichen und/oder für die Vielzahl der Komponenten des Echtzeit-Ethernet-Datennetzwerkes zeitlich zumindest teilweise simultan auf den Netzwerkweichen und/oder den Komponenten zu aktivieren.

## Claims

1. Apparatus for configuring and validating an intervention in a real-time Ethernet data network containing ECUs in a motor vehicle, the apparatus (1) comprising:
- a vehicle diagnostic device (10), which is configured to receive configuration change data and to transfer said data to a first data storage device (20);
- the first data storage device (20), which is configured to receive the configuration change data from the vehicle diagnostic device (10) and to store said data;
- a first data checking device (30), which is configured to check the configuration change data stored in the first data storage device (20) by using a first integrity check and to transfer said data to a second data storage device (40) in the event of a positive first integrity check;
- the second data storage device (40), which is configured to receive the configuration change data from the first data checking device (30) and to store said data;
- a second data checking device (50), which is configured to check the configuration change data stored in the second data storage device (40) by using a second integrity check and to enable said data for the real-time Ethernet data network in the event of a positive second integrity check taking into consideration the overall affected network state,
wherein the second integrity check involves checking whether and what effects the configuration has on the network, this comprising checking the ECUs for the configured configuration and checking the associated communication relationship,
- a configuration master device, which is configured to receive the enabled configuration change data from the second data storage device (40) and to transmit said data to a switch and/or a component of the real-time Ethernet data network in order to renew at least part of an Ethernet TSN configuration in the ECUs and switches.

2. Apparatus according to Claim 1, wherein the first data checking device (30) is configured to check the configuration change data to be stored in the first data storage device (20) for a communication parameter, for example in the form of a maximum packet size and/or a transfer frequency and/or a transfer rate and/or a sender address and/or a receiving address and/or a protocol, on receipt by using the first integrity check.

3. Apparatus according to either of the preceding claims,
wherein the apparatus further comprises an ARQ/TCP device, which is configured to monitor the transfer of the configuration change data to the switch and/or the component of the real-time Ethernet data network and the configuration process based thereon.

4. Apparatus according to one of the preceding claims,
wherein the apparatus is configured to monitor an individual configuration process for a switch and/or a component of the real-time Ethernet data network.

5. Apparatus according to one of the preceding claims,
wherein the apparatus is configured to monitor a multiplicity of configuration processes for a multiplicity of network switches and/or for a multiplicity of components of the real-time Ethernet data network.

6. Apparatus according to Claim 5,
wherein the apparatus is configured to prioritize the multiplicity of configuration processes for the multiplicity of network switches and/or for the multiplicity of components of the real-time Ethernet data network in terms of timing and/or to perform at least some of said processes simultaneously.

7. Apparatus according to Claim 5,
wherein the apparatus is configured to activate at least some of the multiplicity of configuration processes for the multiplicity of network switches and/or for the multiplicity of components of the real-time Ethernet data network at simultaneous times on the network switches and/or the components.

## Revendications

1. Dispositif de configuration et de validation d'une intervention dans un réseau de données Ethernet en temps réel comprenant des unités de commande électroniques (ECU) dans un véhicule automobile, ledit dispositif (1) comprenant :
- une unité de diagnostic de véhicule (10) qui est conçue pour recevoir des données de changement de configuration et pour les transmettre à une première unité de mémorisation de données (20) ;
- la première unité de mémorisation de données (20), qui est conçue pour recevoir et mémoriser les données de changement de configuration provenant du dispositif de diagnostic de véhicule (10) ;
- une première unité de contrôle de données (30) qui est conçue pour contrôler, par un premier contrôle d'intégrité, les données de changement de configuration mémorisées dans la première unité de mémorisation de données (20) et, si le premier contrôle d'intégrité est positif, pour les transmettre à une deuxième unité de mémorisation de données dispositif (40) ;
- la deuxième unité de mémorisation de données (40), qui est conçue pour recevoir et mémoriser les données de changement de configuration provenant du premier dispositif de contrôle de données (30) ;
- une deuxième unité de contrôle de données (50) qui est conçue pour contrôler, par un deuxième contrôle d'intégrité, les données de changement de configuration mémorisées dans la deuxième unité de mémorisation de données (40) et, si le deuxième contrôle d'intégrité est positif, les délivrer en tenant compte de l'ensemble de l'état du réseau concerné pour le réseau de données Ethernet en temps réel,
lors du deuxième contrôle d'intégrité un contrôle étant effectué pour savoir quels sont les effets de la configuration sur le réseau, cela impliquant le contrôle des ECU quant à la configuration configurée et le contrôle de la relation de communication associée,
- une unité maître de configuration qui est conçue pour recevoir les données de changement de configuration délivrées de la deuxième unité de mémorisation de données (40) et pour les envoyer à un commutateur et/ou à un composant du réseau de données Ethernet en temps réel afin de renouveler au moins partiellement une configuration TSN Ethernet dans les ECU et les commutateurs.

2. Dispositif selon la revendication 1, la première unité de contrôle de données (30) est conçue pour contrôler les données de changement de configuration à mémoriser dans la première unité de mémorisation de données (20) lors de la réception avec le premier contrôle d'intégrité quant à un paramètre de communication, par exemple sous la forme d'une taille de paquet maximale et/ou d'une fréquence de transmission et/ou d'un débit de transmission et/ou d'une adresse d'expéditeur et/ou d'une adresse de réception et/ou d'un protocole.

3. Dispositif selon l'une des revendications précédentes, le dispositif comportant également une unité ARQ/TCP qui est conçue pour surveiller la transmission des données de changement de configuration au commutateur et/ou au composant du réseau de données Ethernet en temps réel et le processus de configuration basé sur celles-ci.

4. Dispositif selon l'une des revendications précédentes, le dispositif étant conçu pour surveiller un processus de configuration unique d'un commutateur et/ou d'un composant du réseau de données Ethernet en temps réel.

5. Dispositif selon l'une des revendications précédentes, le dispositif étant conçu pour surveiller un grand nombre de processus de configuration d'un grand nombre de commutateurs de réseau et/ou d'un grand nombre de composants du réseau de données Ethernet en temps réel.

6. Dispositif selon la revendication 5, le dispositif étant conçu pour prioriser dans le temps le grand nombre de processus de configuration du grand nombre de commutateurs de réseau et/ou du grand nombre de composants du réseau de données Ethernet en temps réel et/ou pour les exécuter au moins en partie simultanément.

7. Dispositif selon la revendication 5, le dispositif étant conçu pour activer le grand nombre de processus de configuration du grand nombre de commutateurs de réseau et/ou du grand nombre de composants du réseau de données Ethernet en temps réel au moins en partie simultanément sur les commutateurs de réseau et/ou les composants.
